# EUROPEAN PATENT APPLICATION

(11) **EP 2 674 449 A1**
(43) Date of publication of application: **18.12.2013**
(21) Application number: 12171538.7
(22) Date of filing: 11.06.2012
(51) Int. Cl.: C08J 7/04, C08K 3/36, C09D 7/12

(54) **Nanosilica coating assembly with enhanced durability**

(71) Applicant: 3M Innovative Properties Company, Saint Paul, MN 55133-3427 (US)
(72) Inventor: Jing, Naiyong, St. Paul, MN Minnesota 55133-3427 (US); Jost, Michael, 41453 Neuss (DE); Strerath, Christiane, 41453 Neuss (DE)
(74) Representative: Gabriel, Kiroubagaranne

(57) **Abstract**

The present invention relates to a silica nanoparticle coating assembly having enhanced durability and articles bearing silica nanoparticle coating assemblies thereon. The present invention is also directed to a method for enhancing abrasion resistance of a coating comprising sintered nanosilica particles coated onto a substrate.

## Description

### Technical Field of the Invention

The present invention relates to a silica nanoparticle coating assembly having enhanced durability and articles bearing silica nanoparticle coating assemblies thereon. The present invention is also directed to a method for enhancing the abrasion resistance of a coating comprising sintered silica nanoparticles coated onto a substrate.

### Background of the Invention

Coatings based on sintered silica nanoparticles have recently been described to provide super hydrophilic properties when coated upon a substrate. Those sintered silica nanoparticle based hydrophilic coatings have been shown to impart various properties/functionalities to the substrate upon which they are coated, such as e.g. anti-fogging, anti-reflection or improved cleanability, as described e.g. in WO 2009/140482 and WO 2010/017069.

It is an increasingly needed requirement for those hydrophilic coatings to also exhibit both high durability and abrasion resistance, especially when coated on the surface of articles used in outdoor applications. Providing acceptable durability in an outdoor environment is a more stringent requirement, especially in terms of imparting chemical and abrasion resistance to the coated articles. Partial solutions have been described e.g. in US 4,348,462; US 4,478,876 or US 5,464,900, which describe the formation of the so-called hard coating to impart abrasion resistance to silicon based coating compositions by incorporation of selected functional compounds such as e.g. crosslinkers.

However, the hydrophilic coatings based on sintered silica nanoparticles disclosed in the art are not always satisfactory either in terms of providing acceptable abrasion resistance, UV-stability and durability, in particular when coated onto substrates comprising polymeric materials, and/or in terms of preserving the original hydrophilic properties of the coatings based on sintered silica nanoparticles.

Without contesting the technical advantages associated with the silica nanoparticle based hydrophilic coatings disclosed in the art, there is still a need for silica nanoparticle based coatings and coated articles having improved abrasion resistance, UV-stability and durability while preserving the original hydrophilic properties of the coatings based on sintered silica nanoparticles, in particular when the coatings and the coated articles are used in outdoor applications.

Other advantages of the coatings, coated articles and methods of the invention will be apparent from the following description.

### Summary of the Invention

According to one aspect, the present invention relates to a method for enhancing the abrasion resistance (and durability) of a coating comprising sintered silica nanoparticles coated onto a substrate, the method comprising the step of applying a primer coating (composition) comprising an organofunctional silane to the substrate prior to the step of applying the coating comprising sintered silica nanoparticles to said substrate.

In another aspect, the present invention is directed to a coating assembly comprising a substrate and a silica nanoparticle coating comprising sintered silica nanoparticles thereon, wherein the coating assembly further comprises a primer coating comprising an organofunctional silane in-between the substrate and the silica nanoparticle coating comprising sintered nanoparticles.

According to still another aspect of the present invention, it is provided a coated article comprising a support and a coating assembly as described above thereon.

In yet another aspect, the present invention is directed to the use of a primer coating comprising an organofunctional silane for imparting abrasion resistance and/or durability to a silica nanoparticle coating comprising sintered silica nanoparticles coated onto a substrate.

### Detailed description of the invention

According to one aspect, the present invention relates to a method for enhancing the abrasion resistance (and durability) of a coating comprising sintered silica nanoparticles coated onto a substrate, the method comprising the step of applying a primer coating (composition) comprising an organofunctional silane to the substrate prior to the step of applying the coating comprising sintered silica nanoparticles to the substrate.

According to another aspect, the present invention relates to a method for enhancing the abrasion resistance (and durability) of a silica nanoparticle coating comprising sintered silica nanoparticles coated onto a substrate, the method comprising the step of applying a primer coating comprising an organofunctional silane in-between the substrate and the coating comprising sintered silica nanoparticles.

Suitable primer coating compositions for use herein comprise an organofunctional silane. In the context of the present invention, the expression "organofunctional silane" is meant to refer to a silane that comprises at least one organic ligand that possesses reactive chemical functionality. Suitable organofunctional silanes for use herein may commonly be referred to as silane coupling agents or silane adhesion promoters by those skilled in the art.

Suitable organofunctional silanes for use herein may preferably have the following chemical formula:

(R¹O)ₘ-Si-[(CH₂)ₙ-Y]₄₋ₘ

wherein:
R¹ is independently an alkyl, preferably comprising 1 to 6, more preferably 1 to 4 carbon atoms, even more preferably R¹ is independently selected from the group consisting of methyl, ethyl, propyl, butyl, and acetyl, still more preferably from the group consisting of methyl and ethyl;
m = 1 to 3, preferably m = 2 or 3;
n = 0 to 12, preferably n = 0 to 3, more preferably n = 2 or 3;
Y is a functional group, preferably independently selected from the group consisting of alkoxy, epoxycyclohexyl, glycidyl, glycidyloxy, halogen, (meth)acryloyl, (meth)acryloyloxy, -NH-CH₂-CH₂-NR²R³, -NR²R³ (with R² and R³ being independently selected from the group consisting of H, alkyl, phenyl, benzyl, cyclopentyl and cyclohexyl).

In the context of the present invention, the expression "silica nanoparticle coating comprising sintered silica nanoparticles", is meant to designate a silica nanoparticle coating layer obtained from a coating composition comprising acidified silica nanoparticles, after said coating composition comprising acidified silica nanoparticles has been subjected to an appropriate drying step.

Without wishing to be bound by theory, it is believed that the silica nanoparticle coating comprising sintered silica nanoparticles, as described herein, comprises an aggregate or agglomeration of silica nanoparticles linked together so as to form a porous three-dimensional network. The term "porous" refers to the presence of voids between the silica nanoparticles created when the particles forma continuous coating.

In the context of the present invention, it has been surprisingly discovered that the step of applying a primer coating comprising an organofunctional silane in-between the substrate and the coating comprising sintered silica nanoparticles, strongly improves the abrasion resistance, UV-stability and durability of the coating comprising sintered silica nanoparticles. In the present invention, the expression "abrasion resistance" is meant to designate dry and/or wet abrasion resistance, as measured according to the dry or wet abrasion test method described in the experimental section. The term "durability" is herein meant to refer to the durability as evaluated according to the durability test method described in the experimental section.

From a processing perspective, the improved abrasion resistance, UV-stability and durability of the coating comprising sintered silica nanoparticles is achieved when performing the step of applying a primer coating composition comprising an organofunctional silane to the surface of the substrate prior to the step of contacting the primed surface of the substrate with the coating composition comprising sintered silica nanoparticles.

Suitable primer coating compositions for use in the context of the present invention are those capable of improving the adhesion of the coating layer comprising sintered silica nanoparticles to the surface of the substrate onto which is applied the coating comprising sintered silica nanoparticle. Accordingly, suitable primer coating compositions for use herein are those capable of enhancing the durability, UV-stability and the abrasion resistance of the coating layer comprising sintered silica nanoparticles applied onto the surface of the substrate.

Preferably, suitable primer coating compositions for use herein are those which are additionally capable of preserving, or at least reducing the detrimental effect on, the original beneficial properties of the coating layer comprising sintered silica nanoparticles. In a more preferred aspect, suitable primer coating compositions for use herein are those which are additionally capable of preserving, or at least reducing the detrimental effect on, the original hydrophilic properties (e.g. hydrophilicity) of the coating layer comprising sintered silica nanoparticles.

In the context of the present invention, it has been surprisingly found that finding suitable primer coating compositions for use in combination with the coating layers comprising sintered silica nanoparticles as described above, was not as obvious as expected, in particular when the coated substrate is intended to provide both dry and wet abrasion resistance, more in particular when the coated substrate is intended to preserve its original hydrophilic properties (e.g. hydrophilicity). Without wishing to be bound by theory, it is believed that this is due to the continuous and inorganic nature of the coating comprising sintered silica nanoparticles provided upon the coated substrate, and in particular to the involvement of sinter-bonded silica nanoparticles or continuous network of silica nanoparticles agglomerates.

Suitable organofunctional silanes for use herein are preferably selected from the group consisting of epoxy silanes, amino silanes, silanes comprising at least one ethylenically unsaturated group (also referred to herewith as ethylenically unsaturated silanes), alkoxy silanes, and any combinations or mixtures thereof. Preferably, the ethylenically unsaturated group is an acrylic group or a vinyl group. More preferably, the ethylenically unsaturated group is an acrylic group. Even more preferably, the ethylenically unsaturated group is a (meth)acryloyloxy group.

Preferably, the organofunctional silanes for use herein are selected from the group consisting of epoxy (organofunctional) silanes, amino (organofunctional) silanes, (meth)acryloyloxy (organofunctional) silanes, alkoxy silanes, and any combinations or mixtures thereof.

Suitable primer coating compositions for use herein may comprise the so-called thermally activated primer coating compositions or the so-called photochemically activated primer coating compositions. In the context of the present invention, thermally activated primer coating compositions are particularly preferred.

Suitable primer coating compositions for use herein comprise an organofunctional silane, which is preferably selected from the group consisting of epoxy silanes, amino silanes, (meth)acryloyloxy silanes, alkoxy silanes, and any combinations or mixtures thereof. Suitable thermally activated primer coating compositions for use herein preferably comprise an organofunctional silane which is preferably selected from the group consisting of epoxy silanes, amino silanes, alkoxy silanes, and any combinations or mixtures thereof. Suitable photochemically activated primer coating compositions for use herein preferably comprise an organofunctional silane which is preferably selected from the group consisting of ethylenically unsaturated silanes, more preferably (meth)acryloyloxy silanes, and any combinations or mixtures thereof.

Suitable epoxy silanes for use herein include, but are not limited to, 2-(3,4-epoxycyclohexyl) ethyltrimethoxysilane, 2-(3,4-epoxycyclohexyl) ethyltriethoxysilane, (3-glycidoxypropyl) trimethoxysilane, (3-glycidoxypropyl) triethoxysilane, and any combinations or mixtures thereof. More preferably, the epoxy silane comprises 2-(3,4-epoxycyclohexyl) ethyltrimethoxysilane.

Suitable amino silanes for use herein include, but are not limited to, 3-aminopropyltrimethoxysilane, 3-aminopropyltriethoxysilane, 3-(2-aminoethylamino) propyltrimethoxysilane, 3-(2-aminoethylamino) propyltriethoxysilane, N-(2-aminoethyl)-3-aminopropylmethyldimethoxysilane, N-(2-aminoethyl)-3-aminopropylmethyldiethoxysilane, 4-aminobutyltrimethoxysilane, 4-aminobutyltriethoxysilane, 3-aminopropylmethyldiethoxysilane, 3-aminopropylmethyldimethoxysilane, 3-aminopropyldimethylmethoxysilane, 3-aminopropyldimethylethoxysilane, and any combinations or mixtures thereof. More preferably, the amino silane for use herein comprises 3-aminopropyltrimethoxysilane.

Suitable ethylenically unsaturated silanes, in particular (meth)acryloyloxy silanes for use herein include, but are not limited to, 3-(acryloyloxy) propyl trimethoxysilane, 3-(acryloyloxy) propyl triethoxysilane, 3-(methacryloyloxy) propyl trimethoxysilane, 3-(methacryloyloxy) propyl triethoxysilane, and any combinations or mixtures thereof. More preferably, the silane for use herein comprises 3-(acryloyloxy)propyl trimethoxysilane, 3-(methacryloyloxy) propyl trimethoxysilane, or any combinations or mixtures thereof.

Suitable alkoxy silanes for use herein include, but are not limited to tetra-, tri-or dialkoxy silanes, and any combinations or mixtures thereof. Preferably, the alkyl group(s) of the alkoxy silanes comprises from 1 to 6, more preferably 1 to 4 carbon atoms. Preferred alkoxysilanes for use herein are selected from the group consisting of tetra methoxysilane, tetra ethoxysilane, methyl triethoxysilane, dimethyldiethoxysilane, and any mixtures thereof. A particularly preferred alkoxysilane for use herein comprises tetraethoxysilane.

According to one preferred execution, the primer coating compositions for use herein comprise a mixture of epoxy silanes and amino silanes, as described above, optionally in combination with an alkoxysilane. According to this specific execution, the weight ratio: epoxy silane / amino silane is preferably comprised between 80/20 and 60/40, preferably between 75/25 and 65/35, more preferably of about 70/30. In the specific executions where an alkoxy silane is further incorporated, the weight ratio: epoxy silane /alkoxy silane is preferably comprised between 75/25 and 50/50, more preferably between 70/30 and 55/45, even more preferably between 65/35 and 60/40; and the weight ratio: amino silane / alkoxy silane is preferably comprised between 55/45 and 30/70, more preferably between 50/50 and 35/65, even more preferably between 45/55 and 40/60.

More preferably, the primer coating compositions comprise a mixture of 2-(3,4-epoxycyclohexyl) ethyltrimethoxysilane and 3-aminopropyltrimethoxysilane, or alternatively a mixture of 2-(3,4-epoxycyclohexyl) ethyltriethoxysilane and 3-aminopropyltriethoxysilane, or alternatively a mixture of (3-glycidoxypropyl) trimethoxysilane and 3-aminopropyltrimethoxysilane, or alternatively a mixture of (3-glycidoxypropyl) triethoxysilane and 3-Aminopropyltriethoxysilane. Even more preferably, the primer coating compositions comprise a mixture of 2-(3,4-epoxycyclohexyl) ethyltrimethoxysilane, 3-aminopropyltrimethoxysilane and tetraethoxysilane, or alternatively a mixture of (3-glycidoxypropyl) trimethoxysilane, 3-aminopropyltrimethoxysilane and tetraethoxysilane, or alternatively a mixture of 2-(3,4-epoxycyclohexyl) ethyltriethoxysilane, 3-aminopropyltriethoxysilane and tetraethoxysilane, or alternatively a mixture of (3-glycidoxypropyl) triethoxysilane, 3-aminopropyltriethoxysilane and tetraethoxysilane.

According to another preferred execution, the primer coating compositions for use herein comprise a mixture of at least one (meth)acryloyloxy silane, at least one multifunctional acrylic based additive, and optionally an alkoxysilane; wherein the multifunctional acrylic based additive is preferably selected from the group consisting of trimethylolpropane trimethacrylate, ethylenglycol dimethacrylate, and any combinations or mixtures thereof.

More preferably, the primer coating compositions comprise (meth)acryloyloxy silanes selected from the group consisting of 3-(acryloyloxy) propyl trimethoxysilane, 3-(methacryloyloxy) propyl trimethoxysilane, and any combinations or mixtures thereof, in combination with trimethylolpropane trimethacrylate. According to this specific execution, the weight ratio: 3-(acryloyloxy) propyl trimethoxysilane / trimethylolpropane trimethacrylate is preferably comprised between 95/5 and 60/40, preferably between 95/5 and 70/30, more preferably between 90/10 and 80/20. Similarly, the weight ratio: 3-(methacryloyloxy) propyl trimethoxysilane / trimethylolpropane trimethacrylate is preferably comprised between 95/5 and 60/40, preferably between 95/5 and 70/30, more preferably between 90/10 and 80/20.

Even more preferably, the primer coating compositions comprise a mixture of 3-(acryloyloxy) propyl trimethoxysilane, trimethylolpropane trimethacrylate and tetraethoxysilane. According to this specific execution, the weight ratio: [3-(acryloyloxy) propyl trimethoxysilane/trimethylolpropane trimethacrylate] / tetraethoxysilane is preferably comprised between 98/2 and 80/20, preferably between 98/2 and 90/10, more preferably between 96/4 and 92/8.

Alternatively, the primer coating compositions comprise 3-(methacryloyloxy) propyl trimethoxysilane, trimethylolpropane trimethacrylate, and any combinations or mixtures thereof.

The thermally activated primer coating compositions for use herein are typically prepared in solvent. Examples of suitable solvents include, but are not limited to, aliphatic and alicyclic hydrocarbons (e.g., hexane, heptane, cyclohexane), aromatic solvents (e.g., benzene, toluene, xylene), ethers (e.g., diethylether, glyme, diglyme, diisopropyl ether), esters (e.g., ethyl acetate, butyl acetate), ketones (e.g., acetone, methylethyl ketone, methyl isobutyl ketone), alcohols (ethanol, methanol, butylglycol, isopropanol), and mixtures thereof. Preferably, the thermally activated primer compositions are prepared in ethanol in a concentration between 1 and 15% by weight, preferably in a concentration up to 5% by weight.

The photochemically activated primer coating compositions for use herein may further comprise a crosslinking agent. Useful crosslinking agents include, for example, polyacryl monomers (and the methacryl analogues thereof) selected from the group consisting of :
(a) diacryl containing compounds, such as 1,3-butylene glycol diacrylate, 1,4-butanediol diacrylate, 1,6-hexanediol diacrylate, 1,6-hexanediol monoacrylate monomethacrylate, ethylene glycol diacrylate, alkoxylated aliphatic diacrylate, alkoxylated cyclohexane dimethanol diacrylate, alkoxylated hexanediol diacrylate, alkoxylated neopentyl glycol diacrylate, cyclohexanedimethanol diacrylate, diethylene glycol diacrylate, dipropylene glycol diacrylate, ethoxylated bisphenol A diacrylate, neopentyl glycol diacrylate, polyethylene glycol diacrylate, polyethylene glycol diacrylate, propoxylated neopentyl glycol diacrylate, tetraethylene glycol diacrylate, tricyclodecanedimethanol diacrylate, triethylene glycol diacrylate, tripropylene glycol diacrylate;
(b) tri-acryl containing compounds, such as glycerol triacrylate, trimethylolpropane triacrylate, ethoxylated triacrylates, pentaerythritol triacrylate, propoxylated triacrylates (e.g., propoxylated (3) glyceryl triacrylate, propoxylated (5.5) glyceryl triacrylate, propoxylated (3) trimethylolpropane triacrylate, propoxylated (6) trimethylolpropane triacrylate), trimethylolpropane triacrylate;
(c) higher functionality acryl containing compounds such as ditrimethylolpropane tetraacrylate, dipentaerythritol pentaacrylate, ethoxylated (4) pentaerythritol tetraacrylate, pentaerythritol tetraacrylate, caprolactone modified dipentaerythritol hexaacrylate;
(d) oligomeric acryl compounds such as, for example, urethane acrylates, polyester acrylates, polyester polyurethane acrylates, epoxy acrylates; polyacrylamide analogues of the foregoing; and combinations thereof. Such compounds are widely available from vendors such as, for example, Sartomer Company (examples including CN965 and CN9009), Exton, PA; UCB Chemicals Corporation, Smyrna, GA; and Aldrich Chemical Company, Milwaukee, WI.

Particular useful crosslinking agents for use herein include trimethylolpropane trimethacrylate, ethyleneglycol dimethacrylate and urethane acrylate oligomers.

The weight ratio between the ethylenically unsaturated silane and the crosslinking agent is preferably comprised between 95/5 and 1/99, preferably between 90/10 and 1/99.

The photochemically activated primer coating compositions for use herein may further comprise acid functional acrylates, such as for example acrylic acid and methacrylic acid. When used, these acid functional acrylates are preferably added in amounts of at most 1.5% by weight, preferably at most 1% by weight based on the total weight of the primer.

In order to facilitate photochemical activation (e.g. curing), the photochemically activated primer coating compositions preferably comprise at least one free-radical photoinitiator. Typically, such a photoinitiator comprises less than 15 percent by weight, more typically less than 12% percent based on the total weight of the at least one ethylenically unsaturated silane and the at least one crosslinking agent. Useful free-radical photoinitiators include, for example, those known as useful in the UV curing of acrylate polymers. Such initiators include benzophenone and its derivatives; benzoin such as alpha-methylbenzoin, alpha-phenylbenzoin, alpha-allylbenzoin, alpha-benzylbenzoin; benzoin ethers such as benzil dimethyl ketal (commercially available under the trade designation "IRGACURE 651" from Ciba Specialty Chemicals Corporation), benzoin methyl ether, benzoin ethyl ether, benzoin n-butyl ether; acetophenone and its derivatives such as 2-hydroxy-2-methyl-1-phenyl-1-propanone (commercially available under the trade designation "DAROCUR 1173" from Ciba Specialty Chemicals Corporation), 1-hydroxycyclohexyl phenyl ketone (commercially available under the trade designation "IRGACURE 184", also from Ciba Specialty Chemicals Corporation) and 2,2-dimethoxy-2-phenylacetophenone (commercially available under the trade designation "KB-1" from Polyscience Inc); 2-methyl-1-[4-(methylthio)phenyl]-2-(4-morpholinyl)- 1-propanone commercially available under the trade designation "IRGACURE 907", also from Ciba Specialty Chemicals Corporation); 2-benzyl-2- (dimethylamino)-1-[4-(4-morpholinyl)phenyl]-1-butanone commercially available under the trade designation "IRGACURE 369" from Ciba Specialty Chemicals Corporation. Combinations of two or more photoinitiators may be used.

The photochemically activated primer coating compositions are typically prepared in a solvent. Examples of suitable solvents include aliphatic and alicyclic hydrocarbons (e.g., hexane, heptane, cyclohexane), aromatic solvents (e.g., benzene, toluene, xylene), ethers (e.g., diethylether, glyme, diglyme, diisopropyl ether), esters (e.g., ethyl acetate, butyl acetate), ketones (e.g., acetone, methylethyl ketone, methyl isobutyl ketone), alcohols (methanol, ethanol, isopropyl alcohol) and mixtures thereof. Preferably, the photochemically activated primer coating compositions are prepared in methanol. After coating, the solvent is typically evaporated before the coating is subjected to photochemical activation, such as e.g. UV light.

The photochemically activated primer coating compositions for use herein may further comprise an organic or inorganic acid or base catalyst, in order to facilitate hydrolyses and condensation of the hydrolysable silane groups. Organic acid catalysts include acetic acid, citric acid, formic acid, triflic acid, perfluorobutyric acid and the like. Examples of inorganic acids include sulphuric acid and hydrochloric acid. Examples of useful base catalysts include sodium hydroxide, potassium hydroxide and triethylamine. Organometallic catalysts can also be used. Examples include dibutyltindilaurate and tin di (2-ethylhexanoate). The catalyst will preferably be used in amounts between 0.01 and 10%, more preferably between 0.05 and 5% by weight of the total primer coating composition.

In a preferred aspect, the primer coating compositions for use herein, are free of silica particles, in particular free of silica nanoparticles, more in particular free of acidified silica nanoparticles.

Silica nanoparticle coatings comprising sintered silica nanoparticles, for use in the method of the invention, may be easily identified by those skilled in the art. Any silica nanoparticle comprising coating layer obtained from a composition (e.g. dispersion) comprising acidified silica nanoparticles, and commonly known in the art, may be used in the method according to the present invention.

In a preferred aspect, the method according to the invention comprises the steps of:
a) contacting at least part of the surface of the substrate with a primer coating composition comprising an organofunctional silane;
b) drying, and optionally curing, the primer coating composition so as to form a primed surface;
c) contacting the primed surface with a silica nanoparticle coating composition comprising an aqueous dispersion of silica nanoparticles preferably having an average particle diameter of less than 150 nanometers, more preferably less than 140 nanometers, even more preferably less than 130 nanometers, still more preferably less than 120 nanometers; the aqueous dispersion having a pH of less than 5, preferably less than 4, more preferably less than 3; and
d) drying the silica nanoparticle coating composition so as to provide a coating comprising sintered silica nanoparticles onto the substrate.

According to one preferred aspect of the method of the invention, the silica nanoparticle coating composition for use herein comprises:
a) an aqueous dispersion of a mixture of silica nanoparticles having an average particle diameter of 40 nanometers or less and silica nanoparticles having an average particle diameter greater than 40 nanometers, and
b) an acid having a pKa of less than 5, preferably less than 3, more preferably less than 2, even more preferably less than 0.

Suitable silica nanoparticle coating compositions and methods of manufacturing thereof, for use in this execution of the method of the invention, are fully described in WO 2009/140482, the content of which is incorporated herein by reference. Preferably, the silica nanoparticles having an average particle diameter greater than 40 nanometers for use herein have an average particle diameter of 200 nanometers or less, more preferably of 180 nanometers or less, even more preferably of 150 nanometers or less.

In a preferred aspect, the silica nanoparticle coating composition for use in this execution of the method of the present invention, comprises:
a) an aqueous dispersion of a mixture of:
   i. silica nanoparticles having an average particle diameter of 30 nanometers or less, preferably 20 nanometers or less, more preferably 10 nanometers or less, even more preferably 5 nanometers or less, still more preferably 4 nanometers or less; and
   ii. silica nanoparticles having an average particle diameter greater than 40 nanometers, preferably greater than 60 nanometers, more preferably greater than 80 nanometers, even more preferably greater than 100 nanometers;
      the aqueous dispersion having a pH of less than 5, preferably less than 4, more preferably less than 3; and
b) an acid having a pKa of less than 5, preferably less than 3, more preferably less than 2, even more preferably less than 0.

Preferably, the silica nanoparticles having an average particle diameter greater than 40 nanometers for use herein have an average particle diameter of 200 nanometers or less, more preferably of 180 nanometers or less, even more preferably of 150 nanometers or less.

According to another preferred aspect of the method of the invention, the silica nanoparticle coating composition for use herein comprises:
a) an aqueous dispersion of a mixture of acicular silica nanoparticles and spherical silica nanoparticles, the aqueous dispersion having a pH of less than 5, preferably less than 4, more preferably less than 3; and
b) an acid having a pKa of less than 5, preferably less than 3, more preferably less than 2, even more preferably less than 0.

Suitable silica nanoparticle coating compositions and methods of manufacturing thereof, for use in this execution of the method of the invention, are fully described in WO 2010/017069, the content of which is incorporated herein by reference.

In a preferred aspect, the silica nanoparticle coating composition for use in this execution of the method of the present invention, comprises:
a) an aqueous dispersion of a mixture of:
   i. acicular silica nanoparticles having average an particle diameter comprised between 5 and 30 nanometers, preferably between 7 and 25 nanometers, more preferably between 8 and 20 nanometers, even more preferably between 9 and 15 nanometers, and having an average length comprised between 20 and 300 nanometers, preferably between 30 and 200 nanometers, more preferably between 35 and 150 nanometers, even more preferably between 40 and 100 nanometers; and
   ii. spherical silica nanoparticles having an average particle diameter of 30 nanometers or less, preferably 20 nanometers or less, more preferably 10 nanometers or less, even more preferably 5 nanometers or less;
   the aqueous dispersion having a pH of less than 5, preferably less than 4, more preferably less than 3; and
b) an acid having a pKa of less than 5, preferably less than 3, more preferably less than 2, even more preferably less than 0.

According to still another preferred aspect of the method of the invention, the silica nanoparticle coating composition for use herein comprises:
a) an aqueous dispersion of core-shell particles, each core-shell particle comprising a polymer core surrounded by a shell consisting essentially of silica nanoparticles, preferably of nonporous silica nanoparticles, disposed on the polymer core, the aqueous dispersion having a pH of less than 5, preferably less than 4, more preferably less than 3; and
b) an acid having a pKa of less than 5, preferably less than 3, more preferably less than 2, even more preferably less than 0.

Suitable silica nanoparticle coating compositions and methods of manufacturing thereof, for use in this execution of the method according to the invention, are fully described in WO 2010/114700, the content of which is incorporated herein by reference.

Preferably, the polymer core of the core-shell particles for use in this execution of the method of the present invention, comprises a polymer selected from the group consisting of acrylic polymer, polyurethane polymer, polyolefin polymer including functionalized polyolefin, polystyrene polymer, and any combinations or mixtures thereof.

More preferably, the polymer core of the core-shell particles for use in this execution of the method of the present invention, comprises a polymer selected from the group consisting of acrylic polymers, polyurethane polymers, and any combinations or mixtures thereof.

In one preferred aspect, the silica nanoparticle coating composition for use in this execution of the method of the present invention, comprises:
a) an aqueous dispersion of a mixture of:
   i. acicular silica nanoparticles having an average particle diameter comprised between 5 and 30 nanometers, preferably between 7 and 25 nanometers, more preferably between 8 and 20 nanometers, even more preferably between 9 and 15 nanometers, and having an average length comprised between 20 and 300 nanometers, preferably between 30 and 200 nanometers, more preferably between 35 and 150 nanometers, even more preferably between 40 and 100 nanometers;
   ii. polymer (latex) particles comprising acrylic polymers and/or polyurethane polymers; and
   iii. spherical silica nanoparticles having an average particle diameter of 30 nanometers or less, preferably 20 nanometers or less, more preferably 10 nanometers or less, even more preferably 5 nanometers or less;
   the aqueous dispersion having a pH of less than 5, preferably less than 4, more preferably less than 3; and
b) an acid having a pKa of less than 5, preferably less than 3, more preferably less than 2, even more preferably less than 0.

In another preferred aspect, the silica nanoparticle coating composition for use in this execution of the method of the present invention, comprises:
a) an aqueous dispersion of a mixture of:
   i. spherical silica nanoparticles having an average particle diameter of 30 nanometers or less, preferably 20 nanometers or less, more preferably 10 nanometers or less, even more preferably 5 nanometers or less;
   ii. polymer (latex) particles comprising polyurethane polymers and/or acrylic polymers; and
   iii. spherical silica nanoparticles having an average particle diameter greater than 40 nanometers, preferably greater than 50 nanometers, more preferably greater than 60 nanometers, even more preferably greater than 70 nanometers;
   the aqueous dispersion having a pH of less than 5, preferably less than 4, more preferably less than 3; and
b) an acid having a pKa of less than 5, preferably less than 3, more preferably less than 2, even more preferably less than 0.

In still another preferred aspect, the silica nanoparticle coating composition for use in this execution of the method of the present invention, comprises:
a) an aqueous dispersion of a mixture of:
   i. spherical silica nanoparticles having an average particle diameter of 30 nanometers or less, preferably 20 nanometers or less, more preferably 10 nanometers or less, even more preferably 5 nanometers or less; and
   ii. polymer particles comprising polyurethane polymers and/or acrylic polymers; and
   the aqueous dispersion having a pH of less than 5, preferably less than 4, more preferably less than 3; and
b) an acid having a pKa of less than 5, preferably less than 3, more preferably less than 2, even more preferably less than 0.

In yet another preferred aspect, the silica nanoparticle coating composition for use in this execution of the method of the present invention, comprises:
a) an aqueous dispersion of a mixture of:
   i. acicular silica nanoparticles having an average particle diameter comprised between 5 and 30 nanometers, preferably between 7 and 25 nanometers, more preferably between 8 and 20 nanometers, even more preferably between 9 and 15 nanometers, and having an average length comprised between 20 and 300 nanometers, preferably between 30 and 200 nanometers, more preferably between 35 and 150 nanometers, even more preferably between 40 and 100 nanometers; and
   ii. polymer (latex) particles comprising polyurethane polymers and/or acrylic polymers; and
   the aqueous dispersion having a pH of less than 5, preferably less than 4, more preferably less than 3; and
b) an acid having a pKa of less than 5, preferably less than 3, more preferably less than 2, even more preferably less than 0.

The (acidified) silica nanoparticle coating layers as described above unexpectedly provide excellent dew formation retarding capabilities when applied onto various substrates, in particular to substrates comprising a material selected from the group consisting of polymeric materials such as e.g. polymeric films and sheet materials, glass, ceramic, organic and inorganic composite material, metal, and any combinations thereof. Without wishing to be bound by theory, it is believed that this dew formation retarding capability is due to the continuous and inorganic nature of the silica nanoparticle coating provided upon the coated substrate, and in particular to the involvement of continuous sinter-bonded silica nanoparticles or continuous inorganic network of silica nanoparticles agglomerates. Still without wishing to be bound by theory, it is believed that the porosity characteristics of the silica nanoparticle coating layers as described above increase the so-called capillary effect, which in turn participates in promptly spreading water droplets (including dew water droplets) into a sheet-like configuration.

Substrates to which the coating compositions for use in the present invention can be applied are preferably transparent or translucent to visible light. In some aspects, substrates are made of polyester (e.g. polyethylene terephthalate, polybutyleneterephthalate), polycarbonate, allyldiglycolcarbonate, poly(meth)acrylates, such as polymethylmethacrylate, polystyrene, polysulfone, polyethersulfone, epoxy homopolymers, epoxy addition polymers with polydiamines, polydithiols, polyethylene copolymers, fluorinated surfaces, cellulose esters such as acetate and butyrate, including blends and laminates thereof.

Typically the substrate is in the form of a film, sheet, panel or pane of material and may be a part of an article such as of traffic signs, retroreflective and graphic signage, informative and advertising panels, license plates for automotive vehicles, raised pavement markers, reflectors and linear delineation systems (LDS), advertisement light boxes, platforms or display supports bearing visually observable information, architectural glazing, decorative glass frames, motor vehicle windows and windshields, protective eye wear, and any combinations thereof. The silica nanoparticle coatings may, optionally if desired, cover only a portion of the article, e.g., only the section comprising visually observable information may be coated. The substrate may be flat, curved or shaped.

In other embodiments, the substrate need not be transparent. This particular execution applies e.g. to substrates such as flexible films used in graphics and signage. Flexible films may be made from polyesters such as PET or polyolefins such as PP (polypropylene), PE (polyethylene) and PVC (polyvinyl chloride) are typically preferred. The substrate can be formed into a film using conventional filmmaking techniques such as extrusion of the substrate resin into a film and optional uniaxial or biaxial orientation of the extruded film. The substrate can be treated to improve adhesion between the substrate and the silica nanoparticle coating layers as described above, using, e.g., chemical treatment, corona treatment such as air or nitrogen corona, plasma, flame, flash lamp treatment or actinic radiation. If desired, an optional tie layer can also be applied between the substrate and the coating composition to increase the interlayer adhesion. The other side of the substrate may also be treated using the above-described treatments to improve adhesion between the substrate and an adhesive. The substrate may be provided with graphics, such as words or symbols as known in the art.

Preferably, the substrate for use herein comprises an organic polymeric material, preferably selected from the group consisting of poly(meth)acrylates, polyurethanes, polyesters, polycarbonates, polyolefins, and any combinations or mixtures thereof. In another preferred aspect, the substrate for use herein comprises organic functional polymers selected from copolymers of functional and non-functional organic polymers.

In a more preferred aspect, the substrate for use herein comprises poly(meth)acrylates, and any combinations or mixtures thereof. More preferably, the substrate comprises polymethylmethacrylate, even more preferably impact modified polymethylmethacrylate. According to still a more preferred aspect, the substrate consists essentially of polymethylmethacrylate.

The silica nanoparticle coating layers for use in the method of the present invention are substantially uniform in thickness and are durably adhered to the substrate. The silica coatings for use herein may further provide a hydrophilic surface to the substrate and is particularly useful in providing a hydrophilic surface to hydrophobic polymer substrates. The silica coatings for use herein may also provide antifogging properties. The silica coatings for use herein may also preferably provide dry and wet abrasion resistance and slip properties to the coated substrates, in particular polymeric materials, such as film and sheet materials, thereby improving their handleability.

Coatings that result from the acidified nanoparticle compositions as described above may further provide a water-resistant and mechanically durable hydrophilic surface to a substrate, such as glass and polymeric substrates, and good anti-fogging properties under a variety of temperature and high humidity conditions. Furthermore, the silica coatings for use herein may further provide protective layers and exhibit rinse-away removal of organic contaminates including food and machine oils, paints, dust and dirt, as the nanoporous structure of the coatings tends to prevent penetration by oligomeric and polymeric molecules.

Advantageously, the silica nanoparticle coatings for use herein may further provide excellent scratch resistance, as well as long lasting protection from soil and stain accumulation, in particular from staining minerals and soap deposits. Other advantages include more uniform coatings, better adhesion to substrates, better durability and UV-stability of the coating, increased transmissivity, and easy-to-clean benefit where contaminant may be rinsed away from the coated surface. Advantageously still, the silica nanoparticle coating compositions for use herein are shelf stable, e.g., they do not gel, opacify, or otherwise deteriorate significantly.

The methods of the invention do not require solvent or surfactants for coating on substrates, and therefore are less hazardous and add no volatile organic compounds (VOCs) to the air.

The silica nanoparticles for use herein are dispersions of submicron size silica nanoparticles in an aqueous or in a water/organic solvent mixture. The average particle size may be determined using transmission electron microscopy. The silica nanoparticles are preferably not surface modified.

The nanoparticles for use herein generally have a specific surface area greater than about 50 m²/gram, preferably greater than 200 m²/gram, and more preferably greater than 400 m²/gram. The particles preferably have narrow particle size distributions, that is, a polydispersity of 2.0 or less, preferably 1.5 or less. If desired, larger silica particles may be added, in amounts that do not deleteriously decrease the coatability of the composition on a selected substrate, and do not reduce the transmissivity and/or the hydrophilicity, and/or do not increase the haze.

Suitable inorganic silica sols of porous and nonporous spherical particles in aqueous media are well known in the art and available commercially. Silica sols in water or water-alcohol solutions are available commercially under such trade names as LUDOX (manufactured by E.I. du Pont de Nemours and Co., Inc., Wilmington, Del., USA), NYACOL (available from Nyacol Co., Ashland, MA) or NALCO (manufactured by Ondea Nalco Chemical Co., Oak Brook, Ill. USA). One useful silica sol is NALCO 2326 available as a silica sol with mean particle size of 5 nanometers, pH 10.5, and solid content 15% by weight. Other commercially available silica nanoparticles for use herein include NALCO 1050, NALCO 1115, NALCO 1130, NALCO 2329, NALCO 8699 and NALCO TX11561, commercially available from NALCO Chemical Co.; REMASOL SP30, commercially available from Remet Corp. of Utica, NY; LUDOX SM, commercially available from E. I. du Pont de Nemours Co., Inc.; LI-518 and SI-5540, commercially available from Silco company. Other commercially available silica sols in water dispersion are available commercially under such trade names as Levasil or Bindzil (manufactured by Akzo Nobel). Some useful silica sols are Levasil 500/15, Levasil 50/50, Levasil 100/45, Levasil 200/30, Bindzil 15/500, Bindzil 15/750 and Bindzil 50/80.

Suitable acicular silica particles may be obtained as an aqueous suspension under the trade name SNOWTEX-UP or SNOWTEX-OUP by Nissan Chemical Industries (Tokyo, Japan). The SNOWTEX-UP mixture consists of 20-21 % (w/w) of acicular silica, less than 0.35% (w/w) of Na₂O and water. The particles are about 9 to 15 nanometers in diameter and have lengths of 40 to 300 nanometers. The suspension has a viscosity of <100 mPas at 25°C, a pH of about 9 to 10.5, and a specific gravity of about 1.13 at 20°C. As for the SNOWTEX-OUP mixture, it consists of a 15-16 % (w/w) of acicular silica, with a pH of about 2 to 4.

Other suitable acicular silica particles may be obtained as an aqueous suspension under the trade name SNOWTEX-PS-S and SNOWTEX-PS-M by Nissan Chemical Industries, having a morphology of a string of pearls. The mixture consists of 20-21 % (w/w) of silica, less than 0.2% (w/w) of Na₂O and water. The SNOWTEX-PS-M particles are about 18 to 25 nanometers in diameter and have lengths of 80 to 150 nanometers. The particle size is 80 to 150 by dynamic light scattering methods. The suspension has a viscosity of <100 mPas at 25°C, a pH of about 9 to 10.5, and a specific gravity of about 1.13 at 20°C. The SNOWTEX-PS-S has a particle diameter of 10-15 nm and a length of 80-120 nm.

Examples of commercially available polymer latexes suitable for use herein include those aqueous aliphatic polyurethane emulsions available as NEOREZ R-960, NEOREZ R-966, NEOREZ R-967, NEOREZ R-9036, and NEOREZ R-9699 from DSM NeoResins, Inc. of Wilmington, MA; aqueous anionic polyurethane dispersions available as ESSENTIAL CC4520, ESSENTIAL CC4560, ESSENTIAL R4100, and ESSENTIAL R4188 from Essential Industries, Inc. of Merton, WI; polyester polyurethane dispersions available as SANCURE 843, SANCURE 898, and SANCURE 12929 from Lubrizol, Inc. of Cleveland, OH; an aqueous aliphatic self-crosslinking polyurethane dispersion available as TURBOSET 2025 from Lubrizol, Inc.; and an aqueous anionic, co-solvent free, aliphatic self-crosslinking polyurethane dispersion, available as BAYHYDROL PR240 from Bayer Material Science, LLC of Pittsburgh, PA. Other commercially available polymer latexes suitable for use herein include those aqueous acrylic emulsions available as NEOCRYL A-612, NEOCRYL XK-151 and NEOCRYL XK-52 from DSM NeoResins, Inc. of Wilmington, MA.

Low-or non-aqueous silica sols (also called silica organosols) may also be used and are silica sol dispersions wherein the liquid phase is an organic solvent, or an aqueous organic solvent. In the practice of this invention, the silica sol is chosen so that its liquid phase is compatible with the emulsion, and is typically aqueous or an aqueous organic solvent.

The silica nanoparticle coating compositions for use herein preferably contain an acid having a pKa (H₂O) of less than 5, preferably less than 4, more preferably less than 3.5, even more preferably less than 3, even more preferably less than 2.5, even more preferably less than 2, even more preferably less than 1.5, even more preferably less than 1, most preferably less than 0. Useful acids for use herein include both organic and inorganic acids and may be exemplified by oxalic acid, citric acid, H₂SO₃, H₃PO₄, CF₃CO₂H, HCl, HBr, HI, HBrO₃, HNO₃, HClO₄, H₂SO₄, CF₃SO₃H, CF₃CO₂H, and CH₃SO₂OH. Most preferred acids include HCl, HNO₃, H₂SO₄, and H₃PO₄. In some embodiments, it is desirable to provide a mixture of an organic and inorganic acid. In some embodiments one may use a mixture of acids comprising those having a pKa of 3.5 or less (preferably less than 2.5, most preferably less than 1) and minor amounts of other acids having pKa's of more than 0. The coating compositions generally contain sufficient acid to provide a pH of less than 5, preferably less than 4, most preferably less than 3.

Tetraalkoxysilane coupling agents, such as tetraethylorthosilicate (TEOS) and oligomeric forms, such as alkyl polysilicates (e.g. poly(diethoxysiloxane)), may also be useful to improve binding between silica nanoparticles. The amount of coupling agent included in the coating composition should be limited in order to prevent destruction of the anti-reflective or anti-fog properties of the coating. The optimal amount of coupling agent is determined experimentally and is dependent on the coupling agent's identity, molecular weight and refractive index. The coupling agent(s), when present, are typically added to the composition at levels of 0.1 to 20 percent by weight of the silica nanoparticle concentration, and more preferably about 1 to 15 percent by weight of the silica nanoparticles.

Advantageously, the method of the present invention further comprises the step of incorporating into the coating assembly composed of the substrate, the primer coating comprising an organofunctional silane and the silica nanoparticle coating, any additional components or elements commonly known in the art of coating assemblies. Exemplary components include, but are not limited to, protective layers, liners, backing layers, adhesive composition layers, mirror layers (e.g. aluminum vapor coat), prismatic layers, glass bead layers, and any combinations thereof. Suitable other components and suitable manner for incorporating thereof will be easily identified by those skilled in the art. It will also be apparent to those skilled in the art that the incorporation of additional components into the coating assembly composed of the substrate, the primer coating comprising an organofunctional silane and the silica nanoparticle coating, shall be such that the original properties of the silica nanoparticle coating layer comprising sintered silica nanoparticles (such as e.g. hydrophilicity or dew formation retarding effect) are not detrimentally affected.

According to another aspect of the present invention, it is provided a method of treating the surface of a substrate comprising a coating comprising sintered silica nanoparticles as described above coated onto it, the method comprising the step of applying a primer coating comprising an organofunctional silane as described above to the surface of the substrate prior to the step of applying the coating comprising sintered silica nanoparticles to the surface of the substrate.

According to still another aspect of the present invention, it is provided a method of imparting hydrophilicity to the surface of a substrate, the method comprising the step of applying a primer coating comprising an organofunctional silane as described above to the surface of the substrate so as to form a primed surface, and wherein the method further comprises the step of applying a coating comprising sintered silica nanoparticles as described above to the primed surface.

According to yet another aspect of the present invention, it is provided a method of applying a coating comprising sintered silica nanoparticles as described above onto the surface of a substrate, the method comprising the step of applying a primer coating comprising an organofunctional silane as described above to the surface of the substrate prior to the step of applying the coating comprising sintered silica nanoparticles to the surface of the substrate.

In another aspect, the present invention is directed to a coating assembly comprising a substrate and a silica nanoparticle coating comprising sintered silica nanoparticles thereon, wherein the coating assembly further comprises a primer coating comprising an organofunctional silane in-between the substrate and the silica nanoparticle coating comprising sintered nanoparticles.

In a preferred execution of the coating assembly according to one aspect of the present invention, the substrate and/or the silica nanoparticle coating comprising sintered silica nanoparticles coated thereon and/or the primer coating comprising an organofunctional silane are as described above for use in the method for enhancing the abrasion resistance of a coating comprising sintered silica nanoparticles according to another aspect of the present invention.

In the context of the present invention, it has been surprisingly discovered that the coating layers comprising sintered silica nanoparticles, as described above for use in the method of the present invention, adhere very well to a variety of substrates when used in combination with a primer coating comprising an organofunctional silane acting as an intermediate adhesion promoter layer between the substrate and the coating layer comprising sintered silica nanoparticles.

In a preferred aspect of the coating assembly according to the invention, the substrate comprises a material selected from the group consisting of polymeric materials (such as polymeric films and sheet materials), glass, ceramic, organic and inorganic composite material, metal, and any combinations thereof. More preferably, the substrate for use in the coating assembly of the invention comprises an organic polymeric material, preferably selected from the group consisting of poly(meth)acrylates, polyurethanes, polyesters, polycarbonates, polyolefins, and any combinations or mixtures thereof. In another preferred aspect, the substrate for use in the coating assembly of the invention comprises organic functional polymers selected from copolymers of functional and non-functional organic polymers.

In still a more preferred aspect, the substrate for use in the coating assembly of the invention comprises poly(meth)acrylates, and any combinations or mixtures thereof. More preferably, the substrate comprises polymethylmethacrylate, even more preferably impact modified polymethylmethacrylate. According to still a more preferred aspect, the substrate consists essentially of polymethylmethacrylate.

Accordingly, the primer coating comprising an organofunctional silane for use herein provide such coating assembly or coated substrates with excellent durability, UV-stability and dry and/or wet abrasion resistance, in particular when coated to polymeric substrates selected from poly(meth)acrylates, more preferably from polymethylmethacrylate, even more preferably impact modified polymethylmethacrylate. Without wishing to be bound by theory, it is believed that such excellent durability, UV-stability and (dry and/or wet) abrasion resistance is due to the low temperature sintering of the acidified silica nanoparticles.

In the context of an outdoor application or usage, it is of outmost importance that the corresponding coating assemblies, coated substrates or coated articles provide in particular outstanding wet abrasion resistance, as the latter are subjected to various forms of precipitation such as dew formation, fog, rain and snow. Advantageously, the corresponding coating assemblies, coated substrates or coated articles are further provided with excellent dry abrasion resistance, which makes them more resistant to e.g. vandalism acts.

Suitable primer coating compositions for use in the coating assembly of the invention are identical to those described above for use in the method for enhancing the abrasion resistance of a coating comprising sintered silica nanoparticles according to another aspect of the present invention.

Preferably, the primer coating composition for use in the coating assembly of the invention comprises an organofunctional silane, preferably selected from the group consisting of epoxy silanes, amino silanes, (meth)acryloyloxy silanes, alkoxy silanes, and any combinations or mixtures thereof. More preferably, the organofunctional silane is selected from the group consisting of 2-(3,4-epoxycyclohexyl) ethyltrimethoxysilane; (3-glycidoxypropyl) trimethoxysilane; 3-aminopropyltrimethoxysilane; 3-(2-aminoethylamino) propyltrimethoxysilane; tetraethoxysilane; 3-(acryloyloxy) propyl trimethoxysilane; 3-(methacryloyloxy)propyl trimethoxysilane; and any combinations or mixtures thereof. Preferably still, the primer coating composition for use herein is free of silica particles, in particular free of silica nanoparticles, more in particular free of acidified silica nanoparticles.

In a preferred execution, the coating assembly according to the invention has a static water contact angle of less than 50°, preferably less than 30°, more preferably less than 20°, even more preferably less than 10°, most preferably less than 5°, when measured according to the static water contact angle measurement method described in the experimental section.

In another preferred execution, the coating assembly according to the invention has a static water contact angle of less than 30°, preferably less than 20°, more preferably less than 10°, even more preferably less than 5°, after 100 dry abrasion cycles when measured according to the dry abrasion test method described in the experimental section.

In another preferred execution, the coating assembly according to the invention has a static water contact angle of less than 50°, preferably less than 30°, more preferably less than 20°, even more preferably less than 15°, still more preferably less than 10°, after 500 dry abrasion cycles when measured according to the dry abrasion test method described in the experimental section.

In another preferred execution, the coating assembly according to the invention has a static water contact angle of less than 30°, preferably less than 20°, more preferably less than 15°, after 1000 dry abrasion cycles when measured according to the dry abrasion test method described in the experimental section.

In another preferred execution, the coating assembly according to the invention has a static water contact angle of less than 30°, preferably less than 20°, more preferably less than 15°, even more preferably less than 10°, after 100 wet abrasion cycles when measured according to the wet abrasion test method described in the experimental section.

In another preferred execution, the coating assembly according to the invention has a static water contact angle of less than 50°, preferably less than 30°, more preferably less than 20°, even more preferably less than 15°, still more preferably less than 10°, after 500 wet abrasion cycles when measured according to the wet abrasion test method described in the experimental section.

In another preferred execution, the coating assembly according to the invention has a static water contact angle of less than 30°, preferably less than 25°, more preferably less than 20°, after 1000 wet abrasion cycles when measured according to the wet abrasion test method described in the experimental section.

In another preferred execution, the coating assembly according to the invention has a static water contact angle of less than 40°, preferably less than 35°, more preferably less than 30°, after 5000 wet abrasion cycles when measured according to the wet abrasion test method described in the experimental section.

In another preferred execution, the coating assembly according to the invention has a mechanical durability of at least 5 years, preferably at least 8 years, more preferably at least 10 years, even more preferably at least 12 years, when measured according to the durability test method described in the experimental section.

Advantageously, the coating assembly according to the invention may be provided with any additional components or elements commonly known in the art of coating assemblies or overlaminate coatings. Exemplary components include, but are not limited to, protective layers, liners, backing layers, adhesive composition layers, mirror layers (e.g. aluminum vapor coat), prismatic layers, glass bead layers, and any combinations thereof. Suitable other components and suitable manner for incorporating thereof will be easily identified by those skilled in the art. It will also be apparent to those skilled in the art that the incorporation of additional components into the coating assembly, shall be such that the original properties of the silica nanoparticle coating layer comprising sintered silica nanoparticles (such as e.g. hydrophilicity or dew formation retarding effect) are not detrimentally affected.

Preferably, the coating assembly according to the invention is transparent or translucent to visible light. This specific execution may find particular use when the coating assembly is meant to be applied or coated as an overlaminate coating on various substrates. Alternatively, the coating assembly may not need to be transparent and may be completely opaque.

In some aspects the silica nanoparticle coating compositions provide improved cleanability and provide a tough, resistant layer that protects the substrate and the underlying coated article from damage such as scratches, or other damages resulting from abrasion and solvents. By "cleanablility", it is meant to refer to the ability of the silica nanoparticle coating composition, when cured, to provide oil and soil resistance and help preventing the substrate and the coated article from being soiled by exposure to contaminants such as oils or adventitious dirt. The silica nanoparticle coating composition can also make any protective layer easier to clean if it is soiled, so only a simple rinsing step with water is required to remove contaminants. Providing improved cleanability is particulary advantageous when the silica nanoparticle coating compositions as described above are used in combination with articles meant for outdoor usage.

The silica nanoparticle coating compositions and the primer coating compositions are preferably coated on the substrate using conventional techniques, such as bar, roll, curtain, rotogravure, spray, or dip coating techniques. The preferred methods include bar and roll coating, or air knife coating to adjust thickness. In order to ensure uniform coating and wetting of the film, it may be desirable to oxidize the substrate surface prior to coating using corona discharge or flame treatment methods.

The silica nanoparticle coating layers and the primer coating layers for use in the present invention are preferably applied in uniform average thicknesses varying by less than about 200 Å, and more preferably by less than 100 Å, in order to avoid visible interference color variations in the coating. The optimal average dry coating thickness is dependent upon the particular coating composition, but in general the average thickness of the coating is between 500 and 2500 Å, preferably 750 to 2000 Å, and more preferably 1500 to 2000 Å, as measured using an ellipsometer such as a Gaertner Scientific Corp Model No. L115C. It should be noted, however, that while the average coating thickness is preferably uniform, the actual coating thickness can vary considerably from one particular point on the coating to another.

In one aspect, the silica nanoparticle coatings and the primer coating layers for use in the present invention, may be coated on both sides of the substrate. Preferably, the silica nanoparticle coatings and the primer coating layers for use in the present invention, are coated on only one side of the substrate. The opposite side of the substrate may be uncoated, or coated with any component layer commonly known to those skilled in the art. Preferably, the opposite side is coated with an adhesive layer, and optionally provided with an additional liner layer.

In the context of a method of manufacturing a coating assembly according to the invention, two alternative coating methods may be advantageously used herein.

According to a first preferred coating method, the substrate is coated with the primer coating solution and preferably dried at room temperature for about 15 minutes. The silica nanoparticle coating composition is then subsequently applied on top of the dried primer layer, and the overall coating assembly is submitted to a drying step at a temperature preferably comprised between 70°C and 90°C, more preferably of about 80°C, for a period preferably comprised between 1 and 10 minutes, in a re-circulating oven. An inert gas may be circulated. The temperature may be increased further to speed-up the drying process, but care must be exercised to avoid damage to the substrate.

According to a second preferred coating method, the substrate is coated with the primer coating solution and submitted to a drying step at a temperature preferably comprised between 50°C and 80°C, more preferably of about 60°C, for a period preferably comprised between 1 and 10 minutes. The silica nanoparticle coating composition is then subsequently applied on top of the dried primer layer, and the overall coating assembly is submitted anew to a drying step at a temperature preferably comprised between 70°C and 90°C, more preferably of about 80°C, for about 10 minutes. In the context of the present invention, this second method is more preferably used.

According to another aspect of the present invention, it is provided a coated article comprising a support and a coating assembly thereon, wherein the coating assembly is as described above. Suitable supports for use herein will be easily identified by those skilled in the art. Exemplary supports for use in the coated article of the present invention comprise a material selected from the group consisting of polymeric materials such as e.g. polymeric films and sheet materials, glass, ceramic, organic and inorganic composite material, metal, and any combinations thereof. Suitable supports for use herein may comprise a material identical or different from that used to form the substrate for use in the method of the present invention as described above. The coating assembly is preferably coated onto the support using conventional techniques well known to those skilled in the art.

In some aspects, the coated articles of the invention comprise a support which may be of virtually any construction, having a flat, curved, or complex shape and having formed thereon a continuous network of agglomerated silica nanoparticles. When the coating assembly is applied to transparent supports to achieve increased light transmissivity, the coated article preferably exhibits a total average increase in transmissivity of normal incident light of at least two percent and up to as much as ten percent or more, depending on the support coated, over a range of wavelengths extending at least between 400 to 700 nm. An increase in transmissivity may also be seen at wavelengths into the ultraviolet and/or infrared portion of the spectrum. Preferred coating compositions applied to at least one side of a light transmissive substrate increase the percent transmission of the substrate by at least 5 percent, and preferably by 10 percent, when measured at 550 nm.

Preferably, the support for use herein is non-transparent, and more preferably completely opaque. In a very preferred aspect, the support comprises a retroreflective material. Any commonly know retro-reflective material may be used herein. Suitable retro-reflective material for use herein may be easily identified by those skilled in the art. Exemplary retro-reflective materials include, but are not limited to retro-reflective (co)polymer films sold under the trade name DIAMOND GRADE sheeting (available from 3M Company, St. Paul, MN). According to one aspect, the corresponding coated article is preferably selected from the group consisting of traffic signs, retroreflective and graphic signage, informative and advertising panels, license plates for automotive vehicles, raised pavement markers, reflectors and linear delineation systems (LDS), advertisement light boxes, platforms or display supports bearing visually observable information, architectural glazing, decorative glass frames, motor vehicle windows and windshields, protective eye wear, and any combinations thereof. More preferably, the coated article is preferably selected from the group consisting of traffic signs, retroreflective and graphic signage, and raised pavement markers. Still preferably, the coated article for use herein is intended for outdoor usage or application. Accordingly, the coated article for use herein is preferably used/located in an outdoor environment, and therefore exposed to the elements.

In another aspect, the present invention relates to the use of a primer coating comprising an organofunctional silane for imparting abrasion resistance to a silica nanoparticle coating comprising sintered silica nanoparticles coated onto a substrate, wherein the substrate preferably comprises an organic polymeric material. More preferably, the substrate comprises an organic polymeric material selected from the group consisting of poly(meth)acrylates, polyurethanes, polyesters, polycarbonates, polyolefins, and any combinations or mixtures thereof. In a more preferred aspect of the use according to the invention, the substrate comprises polymethylmethacrylate, even more preferably impact modified polymethylmethacrylate. In an even more preferred aspect of this use according to the invention, the substrate consists essentially of polymethylmethacrylate.

In still another aspect, the present invention relates to the use of a primer coating comprising an organofunctional silane for imparting hydrophilicity to the surface of a substrate, wherein the substrate preferably comprises an organic polymeric material. More preferably, the substrate comprises an organic polymeric material selected from the group consisting of poly(meth)acrylates, polyurethanes, polyesters, polycarbonates, polyolefins, and any combinations or mixtures thereof. In a more preferred aspect of the use according to the invention, the substrate comprises polymethylmethacrylate, even more preferably impact modified polymethylmethacrylate. In an even more preferred aspect of this use according to the invention, the substrate consists essentially of polymethylmethacrylate.

In yet another aspect, the present invention relates to the use of a primer coating comprising an organofunctional silane for applying a coating comprising sintered silica nanoparticles onto the surface of a substrate, wherein the substrate preferably comprises an organic polymeric material. More preferably, the substrate comprises an organic polymeric material selected from the group consisting of poly(meth)acrylates, polyurethanes, polyesters, polycarbonates, polyolefins, and any combinations or mixtures thereof. In a more preferred aspect of the use according to the invention, the substrate comprises polymethylmethacrylate, even more preferably impact modified polymethylmethacrylate. In an even more preferred aspect of this use according to the invention, the substrate consists essentially of polymethylmethacrylate.
Item 1 is a method for enhancing the abrasion resistance of a coating comprising sintered silica nanoparticles coated onto a substrate, the method comprising the step of applying a primer coating (composition) comprising an organofunctional silane to the substrate prior to the step of applying the coating comprising sintered silica nanoparticles to the substrate.
Item 2 is the method of item 1, comprising the steps of:
   a) contacting at least part of the surface of the substrate with a primer coating composition comprising an organofunctional silane;
   b) drying, and optionally curing, the primer coating composition so as to form a primed surface;
   c) contacting the primed surface with a silica nanoparticle coating composition comprising an aqueous dispersion of silica nanoparticles preferably having an average particle diameter of less than 150 nanometers, the aqueous dispersion having a pH of less than 5; and
   d) drying the silica nanoparticle coating composition so as to provide a coating comprising sintered silica nanoparticles onto the substrate.
Item 3 is the method of item 2, wherein the silica nanoparticle coating composition comprises:
   a) an aqueous dispersion of a mixture of silica nanoparticles having an average particle diameter of 40 nanometers or less and silica nanoparticles having an average particle diameter greater than 40 nanometers, and
   b) an acid having a pKa of less than 5.
Item 4 is the method of item 2, wherein the silica nanoparticle coating composition comprises:
   a) an aqueous dispersion of a mixture of acicular silica nanoparticles and spherical silica nanoparticles, wherein the spherical silica nanoparticles preferably have an average particle diameter of 100 nanometers or less; and
   b) an acid having a pKa of less than 5.
Item 5 is the method of item 2, wherein the silica nanoparticle coating composition comprises:
   a) an aqueous dispersion of core-shell particles, each core-shell particle comprising a polymer core surrounded by a shell consisting essentially of silica nanoparticles disposed on the polymer core, the aqueous dispersion having a pH of less than 5, and
   b) an acid having a pKa of less than 5.
Item 6 is the method of item 5, wherein the nonporous silica nanoparticles have a an average particle diameter of 60 nanometers or less.
Item 7 is the method according to any of item 5 or 6, wherein the polymer core of the core-shell particles comprises a polymer selected from the group consisting of acrylic polymer, polyurethane polymer, and any combinations or mixtures thereof.
Item 8 is a method of treating the surface of a substrate comprising a coating comprising sintered silica nanoparticles coated onto it, the method comprising the step of applying a primer coating comprising an organofunctional silane to the surface of the substrate prior to the step of applying the coating comprising sintered silica nanoparticles to the surface of the substrate.
Item 9 is a method of imparting hydrophilicity to the surface of a substrate, the method comprising the step of applying a primer coating comprising an organofunctional silane to the surface of the substrate so as to form a primed surface, and wherein the method further comprises the step of applying a coating comprising sintered silica nanoparticles to the primed surface.
Item 10 is a method of applying a coating comprising sintered silica nanoparticles onto the surface of a substrate, the method comprising the step of applying a primer coating comprising an organofunctional silane to the surface of the substrate prior to the step of applying the coating comprising sintered silica nanoparticles to the surface of the substrate.
Item 11 is the method according to any of the preceding items, wherein the substrate comprises a material selected from the group consisting of polymeric materials (such as polymeric films and sheet materials), glass, ceramic, organic and inorganic composite material, metal, and any combinations thereof.
Item 12 is the method of item 11, wherein the substrate comprises an organic polymeric material, preferably selected from the group consisting of poly(meth)acrylates, polyurethanes, polyesters, polycarbonates, polyolefins, and any combinations or mixtures thereof.
Item 13 is the method according to any of item 11 or 12, wherein the substrate comprises polymethylmethacrylate, even more preferably impact modified polymethylmethacrylate. Preferably, the substrate consists essentially of polymethylmethacrylate.
Item 14 is the method according to any of the preceding items, wherein the organofunctional silane has the following chemical formula:

   (R¹O)ₘ-Si-[(CH₂)ₙ-Y]₄₋ₘ

   wherein:
   R¹ is independently an alkyl, preferably comprising 1 to 6, more preferably 1 to 4 carbon atoms, even more preferably R¹ is independently selected from the group consisting of methyl, ethyl, propyl, butyl, and acetyl, still more preferably from the group consisting of methyl and ethyl;
   m = 1 to 3, preferably m = 2 or 3;
   n = 0 to 12, preferably n = 0 to 3, more preferably n = 2 or 3;
   Y is a functional group, preferably independently selected from the group consisting of alkoxy, epoxycyclohexyl, glycidyl, glycidyloxy, halogen, (meth)acryloyl, (meth)acryloyloxy, -NH-CH₂-CH₂-NR²R³, -NR²R³ (with R² and R³ being independently selected from the group consisting of H, alkyl, phenyl, benzyl, cyclopentyl and cyclohexyl).
Item 15 is the method according to any of the preceding items, wherein the organofunctional silane is selected from the group consisting of epoxy silanes, amino silanes, (meth)acryloyloxy silanes, alkoxy silanes, and any combinations or mixtures thereof.
Item 16 is the method according to any of the preceding items, wherein the organofunctional silane is selected from the group consisting of 2-(3,4-epoxycyclohexyl) ethyltrimethoxysilane; (3-glycidoxypropyl) trimethoxysilane; 3-aminopropyltrimethoxysilane; 3-(2-aminoethylamino) propyltrimethoxysilane; tetraethoxysilane; 3-(acryloyloxy) propyl trimethoxysilane; 3-(methacryloyloxy) propyl trimethoxysilane; and any combinations or mixtures thereof.
Item 17 is the method according to any of the preceding items, wherein the primer coating compositions comprise a mixture of 2-(3,4-epoxycyclohexyl) ethyltrimethoxysilane, 3-aminopropyltrimethoxysilane and tetraethoxysilane, or alternatively a mixture of (3-glycidoxypropyl) trimethoxysilane, 3-aminopropyltrimethoxysilane and tetraethoxysilane, or alternatively a mixture of 2-(3,4-epoxycyclohexyl) ethyltriethoxysilane, 3-aminopropyltriethoxysilane and tetraethoxysilane, or alternatively a mixture of (3-glycidoxypropyl) triethoxysilane, 3-aminopropyltriethoxysilane and tetraethoxysilane.
Item 18 is the method according to any of the preceding items, wherein the primer coating composition is free of silica particles, in particular free of silica nanoparticles, more in particular free of acidified silica nanoparticles.
Item 19 is the method according to any of the preceding items, wherein the silica nanoparticles are not surface modified or surface functionalized.
Item 20 is a coating assembly comprising a substrate and a silica nanoparticle coating comprising sintered silica nanoparticles thereon, wherein said coating assembly further comprises a primer coating comprising an organofunctional silane in-between said substrate and said silica nanoparticle coating comprising sintered nanoparticles.
Item 21 is the coating assembly of item 20, wherein the silica nanoparticle coating is obtainable by the method according to any of items 1 to 7.
Item 22 is the coating assembly according to any of item 20 or 21, wherein the substrate comprises a material selected from the group consisting of polymeric materials (such as polymeric films and sheet materials), glass, ceramic, organic and inorganic composite material, metal, and any combinations thereof.
Item 23 is the coating assembly according to any of items 20 to 22, wherein the substrate comprises an organic polymeric material, preferably selected from the group consisting of poly(meth)acrylates, polyurethanes, polyesters, polycarbonates, polyolefins, and any combinations or mixtures thereof.
Item 24 is the coating assembly of item 23, wherein the substrate comprises polymethylmethacrylate, preferably impact modified polymethylmethacrylate. Preferably, the substrate consists essentially of polymethylmethacrylate.
Item 25 is the coating assembly according to any of items 20 to 24, wherein the substrate comprises a material which is transparent or translucent to visible light.
Item 26 is the coating assembly according to any of items 20 to 25, wherein the organofunctional silane has the following chemical formula:

   (R¹O)ₘ-Si-[(CH₂)ₙ-Y]₄₋ₘ

   wherein:
   R¹ is an alkyl, preferably comprising 1 to 6, more preferably 1 to 4 carbon atoms, even more preferably R¹ is selected from the group consisting of methyl, ethyl, propyl, butyl, and acetyl, still more preferably from the group consisting of methyl and ethyl;
   m = 1 to 3, preferably m = 2 or 3;
   n = 0 to 12, preferably n = 0 to 3, more preferably n = 2 or 3;
   Y is a functional group, preferably selected from the group consisting of alkoxy, epoxycyclohexyl, glycidyl, glycidyloxy, halogen, (meth)acryloyl, (meth)acryloyloxy, -NH-CH₂-CH₂-NR²R³, -NR²R³ (with R² and R³ being independently selected from the group consisting of H, alkyl, phenyl, benzyl, cyclopentyl and cyclohexyl).
Item 27 is the coating assembly according to any of items 20 to 26, wherein the organofunctional silane is selected from the group consisting of epoxy silanes, amino silanes, (meth)acryloyloxy silanes, alkoxy silanes, and any combinations or mixtures thereof.
Item 28 is the coating assembly according to any of items 20 to 27, wherein the organofunctional silane is selected from the group consisting of 2-(3,4-epoxycyclohexyl) ethyltrimethoxysilane; (3-glycidoxypropyl) trimethoxysilane; 3-aminopropyltrimethoxysilane; 3-(2-aminoethylamino) propyltrimethoxysilane; tetraethoxysilane; 3-(acryloyloxy) propyl trimethoxysilane; 3-(methacryloyloxy) propyl trimethoxysilane; and any combinations or mixtures thereof.
Item 29 is the coating assembly according to any of items 20 to 28, wherein the primer coating comprises a mixture of 2-(3,4-epoxycyclohexyl) ethyltrimethoxysilane, 3-aminopropyltrimethoxysilane and tetraethoxysilane, or alternatively a mixture of (3-glycidoxypropyl) trimethoxysilane, 3-aminopropyltrimethoxysilane and tetraethoxysilane, or alternatively a mixture of 2-(3,4-epoxycyclohexyl) ethyltriethoxysilane, 3-aminopropyltriethoxysilane and tetraethoxysilane, or alternatively a mixture of (3-glycidoxypropyl) triethoxysilane, 3-aminopropyltriethoxysilane and tetraethoxysilane.
Item 30 is the coating assembly according to any of items 20 to 29, wherein the primer coating composition is free of silica particles, in particular free of silica nanoparticles, more in particular free of acidified silica nanoparticles.
Item 31 is the coating assembly according to any of items 20 to 30, wherein the silica nanoparticles are not surface modified or surface functionalized.
Item 32 is the coating assembly according to any of items 20 to 31, which has a static water contact angle of less than 50°, preferably less than 30°, more preferably less than 20°, even more preferably less than 10°, most preferably less than 5°, when measured according to the static water contact angle measurement method described in the experimental section.
Item 33 is the coating assembly according to any of items 20 to 32, which has a static water contact angle of less than 30°, preferably less than 20°, more preferably less than 10°, even more preferably less than 5°, after 100 dry abrasion cycles when measured according to the dry abrasion test method described in the experimental section.
Item 34 is the coating assembly according to any of items 20 to 33, which has a static water contact angle of less than 30°, preferably less than 20°, more preferably less than 15°, even more preferably less than 10°, after 500 dry abrasion cycles when measured according to the dry abrasion test method described in the experimental section.
Item 35 is the coating assembly according to any of items 20 to 34, which has a static water contact angle of less than 30°, preferably less than 20°, more preferably less than 15°, after 1000 dry abrasion cycles when measured according to the dry abrasion test method described in the experimental section.
Item 36 is the coating assembly according to any of items 20 to 35, which has a static water contact angle of less than 30°, preferably less than 20°, more preferably less than 15°, even more preferably less than 10°, after 100 wet abrasion cycles when measured according to the wet abrasion test method described in the experimental section.
Item 37 is the coating assembly according to any of items 20 to 36, which has a static water contact angle of less than 30°, preferably less than 20°, more preferably less than 15°, even more preferably less than 10°, after 500 wet abrasion cycles when measured according to the wet abrasion test method described in the experimental section.
Item 38 is the coating assembly according to any of items 20 to 37, which has a static water contact angle of less than 30°, preferably less than 25°, more preferably less than 20°, after 1000 wet abrasion cycles when measured according to the wet abrasion test method described in the experimental section.
Item 39 is the coating assembly according to any of items 20 to 38, which has a static water contact angle of less than 40°, preferably less than 35°, more preferably less than 30°, after 5000 wet abrasion cycles when measured according to the wet abrasion test method described in the experimental section.
Item 40 is a coated article comprising a support and a coating assembly according to any of items 20 to 39 thereon.
Item 41 is the coated article of item 40, wherein the support comprises a retroreflective material.
Item 42 is a coated article according to any of item 40 or 41, which is selected from the group consisting of traffic signs, retroreflective and graphic signage, informative and advertising panels, license plates for automotive vehicles, raised pavement markers, reflectors and linear delineation systems (LDS), advertisement light boxes, platforms or display supports bearing visually observable information, and any combinations thereof; more preferably, the article is selected from the group consisting of traffic signs, retroreflective and graphic signage, and raised pavement markers.
Item 43 is the use of a primer coating comprising an organofunctional silane for imparting abrasion resistance and/or UV-stability and/or durability to a silica nanoparticle coating comprising sintered silica nanoparticles coated onto a substrate, wherein the substrate preferably comprises an organic polymeric material. More preferably, the substrate comprises an organic polymeric material selected from the group consisting of poly(meth)acrylates, polyurethanes, polyesters, polycarbonates, polyolefins, and any combinations or mixtures thereof. In a more preferred aspect of this use, the substrate comprises polymethylmethacrylate, even more preferably impact modified polymethylmethacrylate. In an even more preferred aspect of this use, the substrate consists essentially of polymethylmethacrylate.
Item 44 is the use of a primer coating comprising an organofunctional silane for imparting hydrophilicity to the surface of a substrate, wherein the substrate preferably comprises an organic polymeric material. More preferably, the substrate comprises an organic polymeric material selected from the group consisting of poly(meth)acrylates, polyurethanes, polyesters, polycarbonates, polyolefins, and any combinations or mixtures thereof. In a more preferred aspect of this use, the substrate comprises polymethylmethacrylate, even more preferably impact modified polymethylmethacrylate. In an even more preferred aspect of this use, the substrate consists essentially of polymethylmethacrylate.
Item 45 is the use of a primer coating comprising an organofunctional silane for applying a coating comprising sintered silica nanoparticles onto the surface of a substrate, wherein the substrate preferably comprises an organic polymeric material. More preferably, the substrate comprises an organic polymeric material selected from the group consisting of poly(meth)acrylates, polyurethanes, polyesters, polycarbonates, polyolefins, and any combinations or mixtures thereof. In a more preferred aspect of this use, the substrate comprises polymethylmethacrylate, even more preferably impact modified polymethylmethacrylate. In an even more preferred aspect of this use, the substrate consists essentially of polymethylmethacrylate.
The present invention will be explained in more detail with the following nonlimiting examples. Unless specified otherwise, percentages are percentages by weight with respect to the mass of the total compositions and add up in each case to 100 weight percent.

### EXAMPLES

### Test methods:

### Static Water Contact Angle Measurement [W.C.A.]

Static water contact angle measurements are performed using deionised water, obtained from Millipore Corporation. The contact angle analyzer used is a video contact angle analyzer "VCA Optima" (available from AST Products Inc.). The static contact angles are measured on a sessile drop (1 µL), 30 sec after deposition. The values reported are the average of at least 4 separate measurements.

### Dry Abrasion Test

Dry abrasion tests are performed on a Reciprocating Abraser (Model 5900, available from TABER INDUSTRIES). Dry abrasions are tested by employing a force of 14 N and a velocity of 35 cycles/min (1380 g weight). The cloth used for testing is 13.5 Crockmeter cloth (Crockmeter squares, 100 % cotton).

### Wet Abrasion Test

Wet abrasion tests are performed on a Reciprocating Abraser (Model 5900, available from TABER INDUSTRIES). Wet abrasions are tested by employing a force of 14 N and a velocity of 35 cycles/min (1380 g weight). Wet abrasion is performed employing deionized water. The cloth used for testing is 13.5 Crockmeter cloth (Crockmeter squares, 100 % cotton).

### Durability Test

Durability tests are performed in accordance with the Artificial Weathering Test described in EN ISO 4892-2. The tested samples shall be such that they fulfill the performance requirements described in EN 12899-1:2008-2, after a testing duration of 2000 hours.

### Substrates:

PMMA-1: 3M Scotchlite Diamond Grade DG34095 polymethylmethacrylate film (available from 3M).
PMMA-2: 76 µm thick polymethylmethacrylate film made from Plaskolite CA923 UVA2 resin (available from Plaskolite).
PMMA-3: 50 µm thick polymethylmethacrylate film made from Plaskolite CA945 UVA10 resin (available from Plaskolite).
Polycarbonate (PC) film : available under the tradename LEXAN 8010 (available from GE advanced Materials).
Polyethylene terephthalate (PET) film : MELINEX 618 (available from E.I. du Pont de Nemours).
PVDC primed PET: Polyvinylidene dichloride primed polyethylene terephthalate film.

### Materials used:

| **Abbreviation** | **Composition** | **Availability** |
|---|---|---|
| ACROPTMOS | 3-(acryloyloxy)propyl trimethoxysilane | ALFA AESAR |
| APTMOS | 3-aminopropyl trimethoxysilane | ALFA AESAR |
| ECHETMOS | 2-(3,4-epoxycyclohexyl)ethyltrimethoxysilane | GELEST INC. |
| GPTMOS | (3-glycidoxypropyl)trimethoxysilane (97%) | ALFA AESAR |
| TEOS | Tetraethoxysilane Si(OC₂H₅)₄ | ALDRICH |
| A-174 | 3-(methacryloyloxy)propyl trimethoxysilane | ALFA AESAR |
| AA | Acrylic acid | ALDRICH |
| MAA | Methacrylic acid | ALDRICH |
| SR350 | Trimethylolpropane trimethacrylate | SARTOMER |
| EGDMA | Ethylene glycol dimethacrylate | ALDRICH |
| CN9009 | Aliphatic urethane acrylate oligomer | SARTOMER |
| A-612 | NEOCRYL A-612, 30 wt% acrylic resin in water. | DSM |
| R-966 | NEOREZ R-966, 33 wt% polyurethane dispersion in water | DSM NEO RESINS |
| KB-1 | 2,2-dimethoxy-2-phenylacetophenone | POLYSCIENCE INC. |

### Silica nanoparticles

NALCO 8699 (2-4 nm, 15.1 wt% in water) : available from NALCO
NALCO 1115 (4 nm, sodium stabilized, 10 wt% in water), available from NALCO
NALCO 2329 (75 nm, 40.5 wt% in water), available from NALCO
SI-5540 (120 nm, 38 wt% in water), available from SILCO
SNOWTEX-UP: aqueous dispersion of elongated silica particles; 9-15 nm/40-100 nm; 21.2 wt% in water, available from NISSAN

### Sample preparation:

### A. Silica nanoparticle coating compositions:

### SIL-1 : NALCO 8699/ SI -5540 (70/30)

23.18 g of NALCO 8699 are diluted with 56.82 g of distilled water. In a separate beaker 3.97 g SI-5540 are diluted with 16.03 g of distilled water. Both dispersions are then mixed and acidified with nitric acid to pH 2. The mixture has a total solid content of 5 wt%. The resulting dispersion is stirred for 10 min at room temperature before coating.

### SIL-2: SNOWTEX-UP/NALCO 1115 (70/30)

7.07 g of SNOWTEX-UP dispersion are diluted with 12.93 g of distilled water. To this dispersion, 75 g of diluted NALCO 1115 (35 g NALCO 1115 + 45 g distilled water) are slowly added and the dispersion is acidified with nitric acid to pH 2. The resulting dispersion is stirred for 10 min at room temperature prior to coating.

### SIL-3: Core shell SNOWTEX-UP/A-612/NALCO 1115 (7/3/90)

16.5 g SNOWTEX-UP dispersion (21.2 wt%) are diluted with 63.5 g of distilled water. In a separate beaker, 5 g A-612 (30 wt%) are diluted with 15 g of distilled water. Both solutions are then mixed and acidified with nitric acid to pH 2. The solution has a total solid content of 5 wt%. 10 g of the thus obtained solution are diluted with 45 g of distilled water. To this mixture, 45 g of acidified NALCO 1115 (10 wt%, pH 2) are added. The resulting dispersion is stirred for 10 min at room temperature prior to coating.

### SIL-4: Core-shell NALCO 1115/R-966/NALCO 2329 (63/7/30)

45 g NALCO 1115 (10 wt%) are diluted with 35 g of distilled water. 1.67 g R-966 (33 wt%) are added dropwise and the solution is acidified with nitric acid to a pH of 2. 35 g of the thus obtained dispersion are mixed with a diluted and acidified NALCO 2329 dispersion (1.85 g + 13.15 g distilled water). The resulting dispersion is stirred for 10 min at room temperature prior to coating.

### B. Primer compositions:

### Thermally activated primer compositions

Thermally activated primer compositions are prepared by diluting the primer with ethanol to a solid content as given in the examples. Primer compositions comprising a mixture of components are prepared by mixing the ingredients as given in the examples in ethanol. The primer compositions are mixed at room temperature during 10 min, prior to coating.

### Photochemically activated primer compositions

Several UV curable primer compositions as given in Table 1 below are prepared at 10% solids, according to the procedure as given for UV curable primer UVPR-3 ([ACROPTMOS / SR350 (90/10)] / TEOS : 95 / 5):
UVPR-3 is prepared by mixing following ingredients:
   - A174 (3-(Methacryloyloxy)propyl trimethoxysilane): 136.8 g
   - Methanol (MeOH) : 1440 g
   - SR350 (Trimethylolpropane trimethacrylate): 15.2 g
   - TEOS (Tetraethoxysilane): 8 g
   - 5 drops 0.1 N HCl
   - 144 g MeOH + 16 g KB-1 (2.2-dimethoxy-2-phenylacetophenone)

**Table 1 : Photochemically activated primer compositions**

| **Primer** | **Ingredients** | **Ratio (wt%)** |
|---|---|---|
| UVPR-1 | A-174 / SR350 | 90/10 |
| UVPR-2 | ACROPTMOS / SR350 | 90/10 |
| UVPR-3 | [ACROPTMOS / SR350 (90/10)] / TEOS | 95/5 |
| UVPR-4 | [ACROPTMOS / SR350 (90/10)] / TEOS / AA | 94/5/1 |
| UVPR-5 | [ACROPTMOS / SR350 (90/10)] / TEOS / MAA | 94/5/1 |
| UVPR-6 | [ACROPTMOS / EGDMA (90/10)] / TEOS | 95/5 |
| UVPR-7 | [ACROPTMOS / SR350 (90/10)] / TEOS | 90/10 |
| UVPR-8 | [A174 / CN9009 (10/90)] / SR350 | 99/1 |

### Coating method:

Prior to coating, the substrates are cleaned with isopropanol. The compositions are coated onto the substrates using a Mayer bar coater (commercially available from R D SPECIALTIES Inc, Webster, USA), set at a thickness of 6.

### Primer coating and silica nanoparticle coating

In a first step, the substrate is coated with a thermally or photochemically activated primer composition. In a second step, the silica nanoparticle coating composition is applied on top of the dried/cured primer coating.

### a) Thermally activated primer and silica nanoparticle coating

The thermally activated primer composition is coated onto the substrate (Mayer bar coater 6). The substrate is heated in an oven at 80°C during 10 minutes. After the substrate was cooled to room temperature, the acidified silica nanoparticle composition is coated on top of the dried/cured primer coating (Mayer Bar 6). The coated substrate is heated in an oven at 80°C during 10 min.

### b) Photochemically activated primer and silica nanoparticle coating

The photochemically activated primer composition is coated onto the substrate (Mayer Bar 6) and then dried in an oven at 80°C for 1 min (in order to remove any solvent). The coating is then placed on a conveyer belt coupled to an ultraviolet ("UV") light curing device. UV curing is done under nitrogen using a Fusion 500 watt H or D bulb at 0.218 m/s. (UV lamp available from Fusion UV systems, Inc. Gaitherburg, Maryland (USA)). After UV curing, the primed substrate is coated with the acidified silica nanoparticle coating composition (Mayer Bar 6) and dried in an oven at 80°C during 10 min.

### Examples:

### Examples 1 to 3 , comparative example C-1 and reference example Ref-1

In examples 1 to 3, PMMA-1 substrates are first coated with a primer composition of GPTMOS in ethanol, in a concentration as given in Table 2. The primer is coated and dried according to the general procedure as given above. After the substrate is cooled to room temperature, silica nanoparticle composition SIL-3 is coated on top of the dried primer coating (Mayer Bar 6). The coated substrate is heated in an oven at 80°C during 10 min. Static water contact angles are measured before ("WCA [°] Initial") and after dry abrasion ("WCA [°] Dry Abrasion"). The results are given in Table 2. The values recorded for Comparative example C-1 were obtained on PMMA-1 substrates coated with silica nanoparticle composition SIL-3, without primer coating. The values recorded for Ref-1 are obtained on uncoated PMMA-1 substrate.

**Table 2:**

| **Example** | **Primer layer GPTMOS** | **Silica coating** | **WCA [°] Initial** | **Dry abrasion cycles** | **WCA [°] dry Abrasion** |
|---|---|---|---|---|---|
| 1 | 1% (EtOH) | SIL,-3 | 6.5 ± 1.2 | 100x | 24.7 ± 4.7 |
| | | | | 500x | 16.6 ± 3.1 |
| | | | | 1000x | 27.6 ± 2.5 |
| 2 | 3% (EtOH) | SIL-3 | 6.3 ± 1.0 | 100x | 24.4 ± 4.0 |
| | | | | 500x | 21.0 ± 0.9 |
| | | | | 1000x | 14.7 ± 5.7 |
| 3 | 5% (EtOH) | SIL-3 | 10.7 ± 1.0 | 100x | 17.9 ± 0.5 |
| | | | | 500x | 13.1 ± 1.4 |
| | | | | 1000x | 14.0 ± 3.4 |
| C-1 | / | SIL-3 | 9.5 ± 1.2 | 100x | 25.9 ± 2.9 |
| | | | | 500x | 27.8 ± 3.9 |
| Ref-1 | / | / | 70.2 ± 1.0 | 500x | 63.2 ± 4.7 |
| | | | | 1000x | 61.2 ± 3.1 |

### Examples 4 to 8, comparative example C-2 and reference example Ref-2

In examples 4 to 8, PMMA-2 substrates are first coated with a thermally activated primer composition (5 wt% in ethanol) as given in Table 3. The primers are coated and dried according to the general procedure as given above. After the substrates are cooled to room temperature, silica nanoparticle compositions SIL-3 are coated on top of the dried primer coating (Mayer Bar 6). The coated substrates are heated in an oven at 80°C during 10 min. Static water contact angles are measured before ("WCA [°] Initial") and after dry abrasion ("WCA [°] Dry Abrasion"). The results are listed in Table 3. The values recorded for Comparative example C-2 are obtained on PMMA-2 substrates coated with silica nanoparticle composition SIL-3, without primer coating. The values recorded for Ref-2 are obtained on uncoated PMMA-2 substrate.

**Table 3:**

| **Example** | **Primer layer GPTMOS** | **Silica coating** | **WCA [°] Initial** | **Dry abrasion cycles** | **WCA [°] dry Abrasion** |
|---|---|---|---|---|---|
| 4 | GPTMOS | SIL-3 | 8.2 ± 1.7 | 100x | 9.8 ± 2.2 |
| | | | | 500x | 12.7 ± 1.8 |
| | | | | 1000x | 28.1 ± 6.2 |
| 5 | GPTMOS/TEOS 95/5 | SIL-3 | 7.6 ± 0.8 | 100x | 10.6 ± 1.3 |
| | | | | 500x | 11.3 ± 2.4 |
| 6 | GPTMOS/TEOS 90/10 | SIL-3 | 10.2 ± 1.4 | 100x | 14.4 ± 3.0 |
| | | | | 500x | 14.0 ± 1.4 |
| | | | | 1000x | 17.4 ± 5.5 |
| 7 | GPTMOS/TEOS 70/30 | SIL-3 | 7.0 ± 1.9 | 100x | 10.7 ± 2.4 |
| | | | | 500x | 13.1 ± 3.5 |
| | | | | 1000x | 10.4 ± 2.2 |
| 8 | GPTMOS/TEOS 50/50 | SIL-3 | 6.5 ± 1.4 | 100x | 10.6 ± 1.9 |
| | | | | 500x | 7.6 ± 2.0 |
| | | | | 1000x | 21.8 ± 4.2 |
| C-2 | / | SIL-3 | 9.4 ± 1.3 | 100x | 27.6 ± 2.1 |
| | | | | 500x | 26.1 ± 7.6 |
| Ref-2 | / | / | 76.9 ± 1.7 | 500x | 77.1 ± 3.6 |

### Examples 9 to 11 and comparative example C-3

In examples 9 to 11, PMMA-2 substrates are first coated with a thermally activated primer composition (5 wt% in ethanol) as given in Table 4. The primer compositions are coated and dried according to the general procedure as given above. After the substrates are cooled to room temperature, silica nanoparticle compositions as given in Table 4 are coated on top of the dried primer coating (Mayer Bar 6). The coated substrates are heated in an oven at 80°C during 10 min. Static water contact angles are measured before ("WCA [°] Initial"), after wet abrasion ("WCA [°] Wet abrasion) and after dry abrasion ("WCA [°] Dry Abrasion"). The results are listed in Table 4. The values recorded for Comparative example C-3 are obtained on PMMA-2 substrates coated with silica nanoparticle composition SIL-3, without primer composition.

**Table 4:**

| **Ex** | **Primer composition** | **Silica coating** | **WCA [°] Initial** | **Abrasion cycles** | **WCA [°] Wet abrasion** | **WCA [°] Dry abrasion** |
|---|---|---|---|---|---|---|
| 9 | GPTMOS/APTMOS 90/10 | SIL-3 | 10.2 ± 0.7 | 100x | 15.9 ± 3.4 | ND ^{(*)} |
| | | | | 500x | 12.7 ± 2.7 | 25.2 ± 4.8 |
| 10 | ECHETMOS | SIL-3 | 15.0 ± 3.4 | 100x | 14.7 ± 4.0 | ND ^{(*)} |
| | | | | 500x | 12.0 ± 2.1 | 23.7 ± 8.5 |
| 11 | ECHETMOS/APTMOS 70/30 | SIL-3 | 8.9 ± 2.9 | 100x | 17.0 ± 1.8 | 13.8 ± 1.2 |
| | | | | 500x | 22.3 ± 1.8 | 16.8 ± 1.9 |
| C-3 | / | SIL-3 | 9.4 ± 1.3 | 100x | 19.2 ± 1.6 | 27.6 ± 2.1 |
| | | | | 500x | 17.0 ± 1.4 | 26.1 ± 7.6 |

| | | | | | | |
|---|---|---|---|---|---|---|
| ^{(*)}: not determined. | | | | | | |

### Examples 12 to 22

In examples 16 to 22, PMMA-2 substrates are first coated with a photochemically activated primer composition (10 wt% in methanol) as given in Table 5. The primer compositions are coated, dried and UV cured according to the general procedure as given above. After the substrates are cooled to room temperature, silica nanoparticle compositions as given in Table 5 are coated on top of the dried primer layer (Mayer Bar 6). The coated substrates are heated in an oven at 80°C during 10 min. Static water contact angles are measured before ("WCA [°] Initial") and after dry abrasion ("WCA [°] Dry Abrasion"). The results are listed in Table 5.

**Table 5:**

| **Example** | **Primer** | **Silica coating** | **WCA [°] initial** | **Abrasion cycles** | **WCA [°] dry abrasion** |
|---|---|---|---|---|---|
| 12 | UVPR-1 | SIL-2 | 7.0 ± 3.0 | 500x | 11.6 ± 2.7 |
| 13 | UVPR-2 | SIL-2 | 6.8 ± 2.8 | 500x | 12.7 ± 1.5 |
| 14 | UVPR-1 | SIL-3 | 8.5 ± 0.7 | 500x | 10.9 ± 2.3 |
| 15 | UVPR-2 | SIL-3 | 8.3 ± 1.0 | 500x | 9.5 ± 1.7 |
| 16 | UVPR-3 | SIL-3 | 8.3 ± 0.7 | 500x | 12.4 ± 1.3 |
| | | | | 1000x | 14.7 ± 2.3 |
| 17 | UVPR-4 | SIL-3 | 6.1 ± 1.4 | 1000x | 32.1 ± 9.1 |
| 18 | UVPR-5 | SIL-3 | 8.7 ± 1.6 | 1000x | 11.4 ± 3.8 |
| 19 | UVPR-6 | SIL-3 | <5 | 1000x | 18.9 ± 2.3 |
| 20 | UVPR-7 | SIL-3 | 7.9 ± 1.2 | 500x | 23.2 ± 4.4 |
| 21 | UVPR-1 | SIL-4 | 6.1 ± 1.7 | 500x | 10.3 ± 1.1 |
| 22 | UVPR-2 | SIL-4 | 11.7 ± 2.6 | 500x | 11.9 ± 2,6 |

### Examples 23 to 26, comparative examples C-6 to C-9 and reference examples Ref-3 to Ref-6

In examples 23 to 26, various substrates as indicated in Table 6 are first coated with a UV curable primer composition (10 wt% in methanol) as given in Table 6. The primer compositions are coated, dried and UV cured according to the general procedure as given above. After the substrates are cooled to room temperature, silica nanoparticle compositions as given in Table 6 are coated on top of the dried primer layer (Mayer Bar 6). The coated substrates are heated in an oven at 80°C during 10 min. Static water contact angles are measured before ("WCA [°] Initial") and after dry abrasion ("WCA [°] Dry Abrasion"). The results are listed in Table 6. The values recorded for Comparative examples C-6 to C-9 in Table 6 are obtained on the substrates coated with silica nanoparticle compositions from examples 23 to 26 respectively, but without primer composition. The values recorded for Ref-3 to Ref-6 are the initial WCA values obtained for the corresponding uncoated substrates.

| **Example** | **Primer composition** | **Silica nanoparticle composition** | **WCA [°] initial** | **Abrasion cycles** | **WCA [°] dry abrasion** |
|---|---|---|---|---|---|
| Substrate : PMMA-3 | | | | | |
| | | | | | |
| 23 | UVPR-8 | SIL-1 | <5 | 500x | 26.2±4.2 |
| | | | | 1000x | 26.3±5.7 |
| C-6 | / | SIL-1 | <5 | 1000x | 44.1±1.5 |
| | | | | | |
| Ref-3 | / | / | 72.4±3.1 | / | ND^{(*)} |
| | | | | | |

| Substrate : PET | | | | | |
|---|---|---|---|---|---|
| | | | | | |
| 24 | UVPR-3 | SIL-4 | 24.4±4.1 | 100x | 33.8±9.0 |
| | | | | | |
| C-7 | / | SIL-4 | <5 | 100x | 64.9±0.8 |
| | | | | | |
| Ref-4 | / | / | 72.1 | / | ND^{(*)} |
| | | | | | |

| Substrate : polycarbonate | | | | | |
|---|---|---|---|---|---|
| | | | | | |
| 25 | UVPR-3 | SIL-4 | <5 | 100x | 28.6±5.6 |
| | | | | | |
| C-8 | / | SIL-4 | <5 | 100x | 42.3±9.4 |
| | | | | | |
| Ref-5 | / | / | 86.2 | / | ND^{(*)} |
| | | | | | |

| Substrate : PVDC primed PET | | | | | |
|---|---|---|---|---|---|
| | | | | | |
| 26 | UVPR-3 | SIL-4 | <5 | 100x | 9.7±2.0 |
| | | | | 500x | 14.7±2.7 |
| C-9 | / | SIL-4 | 20.9±3.2 | 100x | 10.0±3.8 |
| | | | | 500x | 25.4±6.4 |
| Ref-6 | / | / | 24.1 | / | ND^{(*)} |
| | | | | | |

| | | | | | |
|---|---|---|---|---|---|
| ^{(*)}: not determined. | | | | | |

## Claims

1. A method for enhancing the abrasion resistance of a coating comprising sintered silica nanoparticles coated onto a substrate, the method comprising the step of applying a primer coating comprising an organofunctional silane to said substrate prior to the step of applying said coating comprising sintered silica nanoparticles to said substrate.

2. A method according to claim 1, comprising the steps of:
a) contacting at least part of the surface of the substrate with a primer coating composition comprising an organofunctional silane;
b) drying, and optionally curing, said primer coating composition so as to form a primed surface;
c) contacting said primed surface with a silica nanoparticle coating composition comprising an aqueous dispersion of silica nanoparticles preferably having an average particle diameter of less than 150 nanometers, said aqueous dispersion having a pH of less than 5; and
d) drying said silica nanoparticle coating composition so as to provide a coating comprising sintered silica nanoparticles onto said substrate.

3. A method according to claim 2, wherein said silica nanoparticle coating composition comprises:
a) an aqueous dispersion of a mixture of silica nanoparticles having an average particle diameter of 40 nanometers or less and silica nanoparticles having an average particle diameter greater than 40 nanometers, and
b) an acid having a pKa of less than 5.

4. A method according to claim 2, wherein said silica nanoparticle coating composition comprises:
a) an aqueous dispersion of a mixture of acicular silica nanoparticles and spherical silica nanoparticles, wherein the spherical silica nanoparticles preferably have an average particle diameter of 100 nanometers or less; and
b) an acid having a pKa of less than 5.

5. A method according to claim 2, wherein said silica nanoparticle coating composition comprises:
a) an aqueous dispersion of core-shell particles, each core-shell particle comprising a polymer core surrounded by a shell consisting essentially of silica nanoparticles disposed on said polymer core, said aqueous dispersion having a pH of less than 5, and
b) an acid having a pKa of less than 5.

6. A method according to any of the preceding claims, wherein the substrate comprises a material selected from the group consisting of polymeric materials, glass, ceramic, organic and inorganic composite material, metal, and any combinations thereof.

7. A method according to claim 6, wherein the substrate comprises an organic polymeric material, preferably selected from the group consisting of poly(meth)acrylates, polyurethanes, polyesters, polycarbonates, polyolefins, and any combinations or mixtures thereof; more preferably the substrate comprises polymethylmethacrylate.

8. A method according to any of the preceding claims, wherein the organofunctional silane is selected from the group consisting of epoxy silanes, amino silanes, (meth)acryloyloxy silanes, alkoxy silanes, and any combinations or mixtures thereof.

9. A method according to any of the preceding claims, wherein the organofunctional silane is selected from the group consisting of 2-(3,4-epoxycyclohexyl) ethyltrimethoxysilane; (3-glycidoxypropyl) trimethoxysilane; 3-aminopropyltrimethoxysilane;3-(2-aminoethylamino) propyltrimethoxysilane; tetraethoxysilane; 3-(acryloyloxy) propyl trimethoxysilane; 3-(methacryloyloxy) propyl trimethoxysilane; and any combinations or mixtures thereof.

10. A method according to any of the preceding claims, wherein the primer coating composition is free of silica particles, in particular free of silica nanoparticles, more in particular free of acidified silica nanoparticles.

11. A coating assembly comprising a substrate and a silica nanoparticle coating comprising sintered silica nanoparticles thereon, wherein said coating assembly further comprises a primer coating comprising an organofunctional silane in-between said substrate and said silica nanoparticle coating comprising sintered nanoparticles.

12. A coating assembly according to claim 11, wherein the silica nanoparticle coating is obtainable by the method according to any of claims 2 to 5.

13. A coating assembly according to any of claim 11 or 12, wherein the substrate comprises a material selected from the group consisting of polymeric materials, glass, ceramic, organic and inorganic composite material, metal, and any combinations thereof.

14. A coating assembly according to any of claims 11 to 13, wherein the substrate comprises an organic polymeric material, preferably selected from the group consisting of poly(meth)acrylates, polyurethanes, polyesters, polycarbonates, polyolefins, and any combinations or mixtures thereof; more preferably the substrate comprises polymethylmethacrylate.

15. A coating assembly according to any of claims 11 to 14, wherein the organofunctional silane is selected from the group consisting of epoxy silanes, amino silanes, (meth)acryloyloxy silanes, alkoxy silanes, and any combinations or mixtures thereof.

16. A coating assembly according to any of claims 11 to 15, wherein the organofunctional silane is selected from the group consisting of 2-(3,4-epoxycyclohexyl) ethyltrimethoxysilane; (3-glycidoxypropyl) trimethoxysilane; 3-aminopropyltrimethoxysilane;3-(2-aminoethylamino) propyltrimethoxysilane; tetraethoxysilane; 3-(acryloyloxy) propyl trimethoxysilane; 3-(methacryloyloxy) propyl trimethoxysilane; and any combinations or mixtures thereof.

17. A coating assembly according to any of claims 11 to 16, which has a static water contact angle of less than 50°, preferably less than 30°, more preferably less than 20°, even more preferably less than 10°, most preferably less than 5°, when measured according to the static water contact angle measurement method described in the experimental section.

18. A coating assembly according to any of claims 11 to 17, which has a static water contact angle of less than 30°, preferably less than 20°, more preferably less than 15°, even more preferably less than 10°, after 500 dry abrasion cycles when measured according to the dry abrasion test method described in the experimental section.

19. A coating assembly according to any of claims 11 to 18, which has a static water contact angle of less than 30°, preferably less than 20°, more preferably less than 15°, even more preferably less than 10°, after 500 wet abrasion cycles when measured according to the wet abrasion test method described in the experimental section.

20. A coated article comprising a support and a coating assembly according to any of claims 11 to 19 thereon.

21. A coated article according to claim 20, wherein the support comprises a retroreflective material.

22. Use of a primer coating comprising an organofunctional silane for imparting abrasion resistance and/or UV-stability and/or durability to a silica nanoparticle coating comprising sintered silica nanoparticles coated onto a substrate.
